# EUROPEAN PATENT APPLICATION

(11) **EP 4 681 594 A1**
(43) Date of publication of application: **21.01.2026**
(21) Application number: 24769774.1
(22) Date of filing: 04.03.2024
(51) Int. Cl.: A47L 11/24

(54) **SELF-MOVING CLEANING DEVICE AND CONTROL METHOD AND APPARATUS THEREFOR, AND STORAGE MEDIUM**

(30) Priority: 15.03.2023 CN 202310269418
(71) Applicant: Beijing Roborock Innovation Technology Co., Ltd., Beijing 102206 (CN)
(72) Inventor: HOU, Zhengtao, Beijing 102206 (CN)
(74) Representative: Cabinet Beau de Loménie
(86) International application number: PCT/CN2024/079792
(87) International publication number: WO 2024/188080

(57) **Abstract**

A self-moving cleaning device (100) and a control method and apparatus therefor, and a storage medium. The self-moving cleaning device (100) comprises a body (110) and cleaning elements (153) arranged at the bottom of the body (110), wherein at least part of each cleaning element (153) is located outside an edge projection area of the body (110). The control method comprises: determining a target interference area of the self-moving cleaning device (100) (S401); and on the basis of obstacle information in the target interference area, controlling the self-moving cleaning device (100) to move (S402).

## Description

The present application claims priority to the Chinese patent application No. 202310269418.1, filed with the Chinese Patent Office on March 15, 2023 and entitled "SELF-MOVING CLEANING DEVICE AND CONTROL METHOD AND APPARATUS THEREFOR, AND STORAGE MEDIUM", which is incorporated herein by reference in its entirety.

### TECHNICAL FIELD

The present disclosure relates to the field of intelligent control technologies, and in particular to a self-moving cleaning device and a control method and apparatus thereof as well as a storage medium.

### BACKGROUND

A current cleaning device, such as a self-moving cleaning robot, can usually travel automatically in a certain area to be cleaned to complete a cleaning operation without a user's operation. During the traveling process, the cleaning device may encounter an obstacle and needs to avoid the obstacle to continue traveling.

### SUMMARY

### (I) Object of the present application

An object of the present application is to provide a self-moving cleaning device and a control method and apparatus thereof as well as and a storage medium.

### (II) Technical solutions

In a first aspect of the present disclosure, a control method of a self-moving cleaning device is provided. The self-moving cleaning device includes: a body and a cleaning element arranged at the bottom of the body, at least a portion of the cleaning element being located outside an edge projection area of the body; and the control method of the self-moving cleaning device includes:
determining a target interference area of the self-moving cleaning device, and controlling the self-moving cleaning device to travel based on obstacle information within the target interference area.

In some optional embodiments, the body is circular; and determining the target interference area of the self-moving cleaning device includes: determining the target interference area based on a structure of the self-moving cleaning device and a position of the self-moving cleaning device in a space where it is located, wherein the structure of the self-moving cleaning device includes a radius of the body, and a maximum distance between an outer edge of the cleaning element located outside the edge projection area of the body and a rotation center of the body.

In some optional embodiments, controlling the self-moving cleaning device to travel based on the obstacle information within the target interference area includes: when there is an obstacle within the target interference area, determining a relative position between the obstacle and the self-moving cleaning device; and controlling the self-moving cleaning device to perform a corresponding obstacle avoidance operation based on the relative position.

In some optional embodiments, the cleaning element is arranged at the rear of the body, and controlling the self-moving cleaning device to perform the corresponding obstacle avoidance operation based on the relative position includes:
when the obstacle is located at one side of the self-moving cleaning device and the self-moving cleaning device performs a turning operation toward a side opposite to the obstacle, acquiring a reachable area of the self-moving cleaning device based on a map of the space where the self-moving cleaning device is located; and determining a rotation direction and a rotation angle of the self-moving cleaning device based on the reachable area, and controlling the self-moving cleaning device to perform a backward operation after rotating according to the rotation direction and the rotation angle to enable the obstacle to exit the target interference area.

In some optional embodiments, controlling the self-moving cleaning device to perform the corresponding obstacle avoidance operation based on the relative position also includes: enabling the self-moving cleaning device to rotate back to an original angle and perform the turning operation.

In some optional embodiments, a plurality of the cleaning elements are symmetrically arranged at the rear of the body, and controlling the self-moving cleaning device to perform the corresponding obstacle avoidance operation based on the relative position includes:
when the obstacle is located behind the self-moving cleaning device and the self-moving cleaning device performs a turning operation, acquiring a reachable area of the self-moving cleaning device based on a map of the space where the self-moving cleaning device is located; and when the reachable area is located in front of the self-moving cleaning device, enabling the self-moving cleaning device to travel forward to cause the obstacle to exit the target interference area, otherwise, determining a rotation direction and a rotation angle of the self-moving cleaning device based on the reachable area, and controlling the self-moving cleaning device to perform a forward operation after rotating according to the rotation direction and the rotation angle to enable the obstacle to exit the target interference area.

In some optional embodiments, controlling the self-moving cleaning device to perform the corresponding obstacle avoidance operation based on the relative position also includes:
if the obstacle is still located within the target interference area, after the self-moving cleaning device is controlled to perform the forward operation after rotating according to the rotation direction and the rotation angle, re-determining a rotation direction and a rotation angle of the self-moving cleaning device based on the reachable area, and controlling the self-moving cleaning device to perform a forward operation after rotating according to the re-determined rotation direction and rotation angle to enable the obstacle to exit the target interference area.

In some optional embodiments, controlling the self-moving cleaning device to perform the corresponding obstacle avoidance operation based on the relative position also includes:
if the obstacle is still located within the target interference area, after repeating the step of re-determining the rotation direction and the rotation angle based on the reachable area and controlling the self-moving cleaning device to perform a forward operation after rotating according to the re-determined rotation direction and rotation angle for multiple times, adjusting a rotation direction of the cleaning elements to enable the rotation direction of the cleaning elements to be the same as a turning direction of the turning operation, or controlling the cleaning elements to stop rotating and controlling the self-moving cleaning device to perform the turning operation until the obstacle exits the target interference area.

In some optional embodiments, controlling the self-moving cleaning device to perform the corresponding obstacle avoidance operation based on the relative position also includes: enabling the self-moving cleaning device to perform the turning operation after the obstacle exits the target interference area.

According to an embodiment of a second aspect of the present disclosure, a control apparatus of a self-moving cleaning device is provided, wherein the self-moving cleaning device includes: a body and a cleaning element arranged at the bottom of the body, at least a portion of the cleaning element being located outside an edge projection area of the body; and the control apparatus includes:
a determination module configured to determine a target interference area of the self-moving cleaning device; and a control module configured to control the self-moving cleaning device to travel based on obstacle information within the target interference area.

In some optional embodiments, the body is circular, and the determination module is configured to: determine the target interference area based on a structure of the self-moving cleaning device and a position of the self-moving cleaning device in a space where it is located, wherein the structure of the self-moving cleaning device includes a radius of the body, and a maximum distance between an outer edge of the cleaning element located outside the edge projection area of the body and a rotation center of the body.

In some optional embodiments, the control module includes: a relative position determination module configured to: when there is an obstacle within the target interference area, determine a relative position between the obstacle and the self-moving cleaning device; and a processing module configured to control the self-moving cleaning device to perform a corresponding obstacle avoidance operation based on the relative position.

In some optional embodiments, the cleaning element is arranged at the rear of the body, and the processing module includes: a first acquisition unit configured to: when the obstacle is located at one side of the self-moving cleaning device and the self-moving cleaning device performs a turning operation toward a side opposite to the obstacle, acquire a reachable area of the self-moving cleaning device based on a map of the space where the self-moving cleaning device is located; and a first processing unit configured to determine a rotation direction and a rotation angle of the self-moving cleaning device based on the reachable area, and control the self-moving cleaning device to perform a backward operation after rotating according to the rotation direction and the rotation angle to enable the obstacle to exit the target interference area.

In some optional embodiments, the processing module also includes: a reset unit configured to control the self-moving cleaning device to rotate back to an original angle and perform the turning operation.

In some optional embodiments, a plurality of the cleaning elements are symmetrically arranged at the rear of the body, and the processing module includes: a second acquisition unit configured to: when the obstacle is located behind the self-moving cleaning device and the self-moving cleaning device performs a turning operation, acquire a reachable area of the self-moving cleaning device based on a map of the space where the self-moving cleaning device is located; and a second processing unit configured to: when the reachable area is located in front of the self-moving cleaning device, enable the self-moving cleaning device to travel forward to cause the obstacle to exit the target interference area, otherwise, determine a rotation direction and a rotation angle of the self-moving cleaning device based on the reachable area, and control the self-moving cleaning device to perform a forward operation after rotating according to the rotation direction and the rotation angle to enable the obstacle to exit the target interference area.

In some optional embodiments, the processing module also includes: a third processing unit configured to: if the obstacle is still located within the target interference area after the self-moving cleaning device is controlled to perform the forward operation after rotating according to the rotation direction and the rotation angle, re-determine a rotation direction and a rotation angle of the self-moving cleaning device based on the reachable area, and control the self-moving cleaning device to perform a forward operation after rotating according to the re-determined rotation direction and rotation angle to enable the obstacle to exit the target interference area.

In some optional embodiments, the processing module also includes: a fourth processing unit configured to: if the obstacle is still located within the target interference area, after the step that the rotation direction and the rotation angle are re-determined based on the reachable area and the self-moving cleaning device is controlled to perform a forward operation after rotating according to the re-determined rotation direction and rotation angle is repeated multiple times, adjust a rotation direction of the cleaning elements to enable the rotation direction of the cleaning elements to be the same as a turning direction of the turning operation, or control the cleaning elements to stop rotating and control the self-moving cleaning device to perform the turning operation until the obstacle exits the target interference area.

In some optional embodiments, the processing module also includes: a fifth processing unit configured to enable the self-moving cleaning device to perform the turning operation after the obstacle exits the target interference area.

According to an embodiment of a third aspect of the present disclosure, a readable storage medium storing a program or instruction thereon is provided, wherein the program or instruction, when performed by a processor, implements the steps of the control method of the self-moving cleaning device according to any one of items in the first aspect.

According to an embodiment of a fourth aspect of the present disclosure, a self-moving cleaning device is provided. The self-moving cleaning device includes a storage medium, a processor, and a computer program stored on the storage medium and executable on the processor, wherein the processor, when executing the program, implements the control method of the self-moving cleaning device according to any one of items in the first aspect.

According to an embodiment of a fifth aspect of the present disclosure, a self-moving cleaning device is provided. The self-moving cleaning device includes: a body and a cleaning element arranged at the bottom of the body, at least a portion of the cleaning element being located outside an edge projection area of the body; a driving apparatus configured to drive the self-moving cleaning device to travel; a perception apparatus configured to perceive obstacle information around a perimeter of the self-moving cleaning device; and a control module configured to determine a target interference area of the self-moving cleaning device based on the perception information of the perception apparatus, and control the driving apparatus to drive the self-moving cleaning device to travel based on the obstacle information within the target interference area.

In some optional embodiments, the body is circular; the perception apparatus is also configured to determine a position of the self-moving cleaning device in a space where it is located; and the control module is also configured to determine the target interference area based on a structure of the self-moving cleaning device and a position, determined by the perception apparatus, of the self-moving cleaning device in a map of the space where it is located, wherein the structure of the self-moving cleaning device includes a radius of the body, and a maximum distance between an outer edge of the cleaning element located outside the edge projection area of the body and a rotation center of the body.

In some optional embodiments, the control module is also configured to: when it is determined based on the perception information of the perception apparatus that there is an obstacle within the target interference area, determine a relative position between the obstacle and the self-moving cleaning device based on the perception information of the perception apparatus; and the control module is also configured to control the driving apparatus to drive the self-moving cleaning device to perform a corresponding obstacle avoidance operation based on the relative position.

In some optional embodiments, the cleaning element is arranged at the rear of the body; the control module is also configured to: when it is determined based on the perception information of the perception apparatus that the obstacle is located at one side of the self-moving cleaning device and the self-moving cleaning device performs a turning operation toward a side opposite to the obstacle, acquire a reachable area of the self-moving cleaning device based on the map of the space where the self-moving cleaning device is located; and the control module is also configured to determine a rotation direction and a rotation angle of the self-moving cleaning device based on the reachable area, and control the driving apparatus to drive the self-moving cleaning device to perform a backward operation after rotating according to the rotation direction and the rotation angle to enable the obstacle to exit the target interference area.

In some optional embodiments, the control module is also configured to control the driving apparatus to drive the self-moving cleaning device to rotate back to an original angle and perform the turning operation.

In some optional embodiments, a plurality of the cleaning elements are symmetrically arranged at the rear of the body; and the control module is also configured to:
when the obstacle is located behind the self-moving cleaning device and the self-moving cleaning device performs a turning operation, acquire a reachable area of the self-moving cleaning device based on the map of the space where the self-moving cleaning device is located; and when it is determined based on the perception information of the perception apparatus that the reachable area is located in front of the self-moving cleaning device, control the driving apparatus to drive the self-moving cleaning device to travel forward to enable the obstacle to exit the target interference area, otherwise, determine a rotation direction and a rotation angle of the self-moving cleaning device based on the reachable area, and control the driving apparatus to drive the self-moving cleaning device to perform a forward operation after rotating according to the rotation direction and the rotation angle to enable the obstacle to exit the target interference area.

In some optional embodiments, the control module is also configured to: if it is determined based on the perception information of the perception apparatus that the obstacle is still located within the target interference area after the self-moving cleaning device is controlled to perform the forward operation after rotating according to the rotation direction and the rotation angle, re-determine a rotation direction and a rotation angle of the self-moving cleaning device based on the reachable area, and control the driving apparatus to drive the self-moving cleaning device to perform a forward operation after rotating according to the re-determined rotation direction and rotation angle to enable the obstacle to exit the target interference area.

In some optional embodiments, the control module is also configured to: control the driving apparatus to drive the self-moving cleaning device to perform the turning operation after the obstacle exits the target interference area.

In some optional embodiments, the self-moving cleaning device also includes: a motion mechanism configured to drive the cleaning element to rotate; and
the control module is also configured to: if it is determined based on the perception information of the perception apparatus that the obstacle is still located within the target interference area, after repeating the step of re-determining the rotation direction and the rotation angle based on the reachable area and controlling the self-moving cleaning device to perform a forward operation after rotating according to the re-determined rotation direction and rotation angle for multiple times, control the motion mechanism to adjust a rotation direction of the cleaning elements to enable the rotation direction of the cleaning elements to be the same as a turning direction of the turning operation, or control the motion mechanism to enable the cleaning elements to stop rotating and control the driving apparatus to drive the self-moving cleaning device to perform the turning operation until the obstacle exits the target interference area.

### (III) Technical effects

The above technical solutions of the present application have the following technical effects.

In the technical solutions of the present application, by determining the target interference area of the self-moving cleaning device during its operation process, obstacles within which area ranges that would affect the smooth traveling of the self-moving cleaning device can be identified. Therefore, controlling the driving apparatus to drive the self-moving cleaning device to travel based on the obstacle information within the target interference area can reduce or avoid interference between the cleaning element protruding from the body of the self-moving cleaning device and an obstacle, thereby enhancing the obstacle avoidance experience of the self-moving cleaning device, and improving the operational smoothness of the self-moving cleaning device.

### BRIEF DESCRIPTION OF THE DRAWINGS

By reading the following detailed description of optional implementations, various other advantages and benefits will become clear to those of ordinary skill in the art. The accompanying drawings are only for the purpose of illustrating optional implementations, but are not considered to be limitations of the present application. Throughout the accompanying drawings, the same reference symbols refer to the same components. In the accompanying drawings:
FIG. 1 is a schematic structural diagram of a self-moving cleaning device according to an optional embodiment of the present disclosure;
FIG. 2 is a schematic structural diagram of the embodiment shown in FIG. 1 from another perspective;
FIG. 3 is a schematic diagram of a target interference area of a self-moving cleaning device according to an optional embodiment of the present disclosure;
FIG. 4 is a schematic flowchart of a control method of a self-moving cleaning device provided by an embodiment of the present disclosure;
FIG. 5 is a schematic block diagram of a control apparatus of a self-moving cleaning device provided by an embodiment of the present disclosure; and
FIG. 6 is a schematic diagram of an electronic structure of a self-moving cleaning device provided by an embodiment of the present disclosure.

### Description of the reference signs:

100 self-moving cleaning device, 110 body, 111 forward portion, 112 rearward portion, 120 perception apparatus, 121 position determination apparatus, 122 buffer, 130 human-machine interaction system, 140 driving apparatus, 141 driving wheel assembly, 142 driven wheel, 150 cleaning system, 151 dry cleaning system, 152 side brush, 153 cleaning element, 160 control module, 500 control apparatus, 510 determination module, 520 control module, 601 processing apparatus, 602 ROM (Read-Only Memory), 603 RAM (Random Access Memory), 604 bus, 605 I/O (Input/Output) interface, 606 input apparatus, 607 output apparatus, 608 storage apparatus, and 609 communication apparatus.

### DETAILED DESCRIPTION

In the following description, a large number of specific details are provided to understand the technical solutions provided by the present disclosure more thoroughly. However, it is apparent to those skilled in the art that the technical solutions provided by the present disclosure may be implemented without one or more of these details.

It should be noted that the terms as used herein are only intended to describe specific embodiments rather than to limit the exemplary embodiments according to the present disclosure. The singular forms used herein are also intended to include the plural forms unless otherwise indicated clearly in the context. Furthermore, it should also be understood that the terms "include" and/or "comprise" used in the Description specify the existence of the stated features, integers, steps, operations, elements and/or components, but does not exclude the existence or addition of one or more other features, integers, steps, operations, elements, components and/or combinations thereof.

The exemplary embodiments according to the present disclosure will now be described in more detail with reference to the accompanying drawings. However, these exemplary embodiments may be implemented in a variety of different forms and should not be construed as being limited to the embodiments set forth herein. It should be understood that these embodiments are provided to make the disclosure of the present disclosure thorough and complete and to fully convey the concepts of these exemplary embodiments to those of ordinary skill in the art.

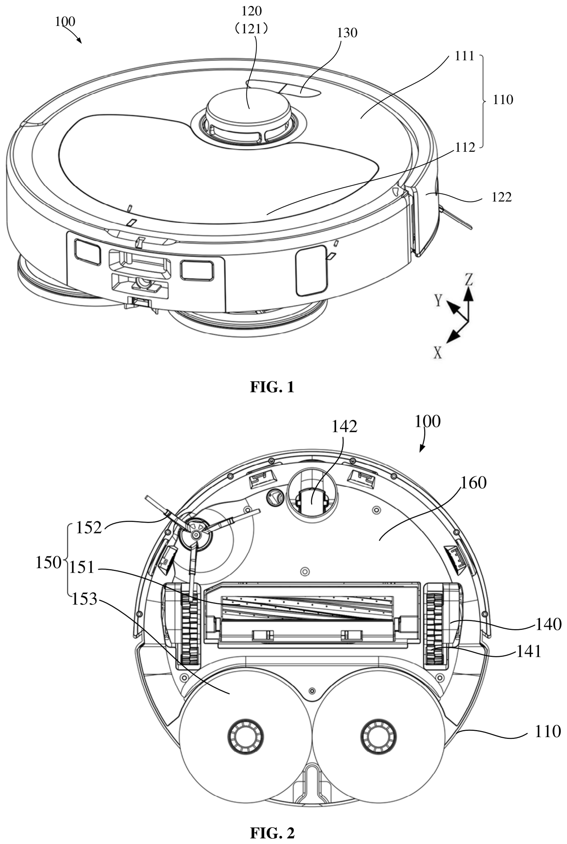

An embodiment of the present disclosure provides a possible application scenario, which includes a self-moving cleaning device 100. FIGs. 1 and 2 are schematic structural diagrams of the self-moving cleaning device 100 according to an exemplary implementation of the present disclosure. As shown in FIGs. 1 and 2, the self-moving cleaning device 100 of the present disclosure may be a mopping robot, a sweeping and mopping integrated machine, etc. For ease of description, this implementation describes the technical solution of the present disclosure using the sweeping and mopping integrated machine as an example.

As shown in FIGs. 1 and 2, the self-moving cleaning device 100 may include a mobile platform, a perception apparatus 120, a human-machine interaction system 130, a driving apparatus 140, a cleaning module, an energy system, and a control module 160.

The mobile platform may be configured to move automatically along a target direction on an operating surface. The operating surface may be a surface to be cleaned by the self-moving cleaning device 100. In some embodiments, the sweeping self-moving cleaning device 100 works on the ground, which is the operating surface.

In some embodiments, the mobile platform may be an autonomous mobile platform, or a non-autonomous mobile platform. The autonomous mobile platform refers to that the mobile platform itself can automatically and adaptively make an operational decision based on an unexpected environmental input; and the non-autonomous mobile platform itself cannot adaptively make an operational decision based on an unexpected environmental input, but can perform an established procedure or operate according to a certain logic. Accordingly, when the mobile platform is the autonomous mobile platform, the target direction may be determined autonomously by the self-moving cleaning device 100; and when the mobile platform is the non-autonomous mobile platform, the target direction may be set systematically or manually. The mobile platform may be regarded as the body 110 of the self-moving cleaning device 100. When the mobile platform is the autonomous mobile platform, the body 110 includes a forward portion 111 and a rearward portion 112.

As shown in FIGs. 1 and 2, the perception apparatus 120 includes a position determination apparatus 121 located above the body 110, a buffer 122 located at the forward portion 111 of the body 110, a visual sensor and a laser sensor (not shown in the figure), an infrared sensor (not shown in the figure), a magnetometer (not shown in the figure), an accelerometer (not shown in the figure), a gyroscope (not shown in the figure), an odometer (not shown in the figure), an inertial sensor (not shown in the figure), a wheel sensor (not shown in the figure), and other sensing apparatuses located on the body 110, for providing the control module 160 with various position information and motion state information of the machine. For example, whether a cleaning robot has moved can be detected through the gyroscope of the self-moving cleaning device 100. For instance, the gyroscope is a triaxial gyroscope, and based on changes in the acceleration of the triaxial gyroscope, whether the cleaning robot has moved can be determined. Or, whether the cleaning robot has rotated can be determined through the wheel sensor of the self-moving cleaning device 100.

The position determination apparatus 121 includes, but is not limited to, a camera and a laser ranging device. The laser ranging device (such as a laser distance sensor (LDS)) can measure events (or objects) within a measured height range above the self-moving cleaning device 100. The measured height range may be set, for example, as a range of 8-10 centimeters above the self-moving cleaning device 100.

In order to describe behaviors of the self-moving cleaning device 100 more clearly, directions are defined as follows: the self-moving cleaning device 100 may travel on the ground by various combinations of movements relative to the following three mutually perpendicular axes defined by the body 110, i.e., a transversal axis x, a front-rear axis y and a center vertical axis z. A forward driving direction along the front-rear axis y is designated as "forward", and a rearward driving direction along the front-rear axis y is designated as "rearward". The transverse axis x substantially extends between a right wheel and a left wheel of the self-moving cleaning device 100 along an axial center defined by a center point of the driving wheel assembly 141. The self-moving cleaning device 100 may rotate around the x-axis. It is referred to as "pitching up" when the forward portion 111 of the self-moving cleaning device 100 tilts upward and the rearward portion 112 thereof tilts downward; and it is referred to as "pitching down" when the forward portion 111 of the self-moving cleaning device 100 tilts downward and the rearward portion 112 thereof tilts upward. Additionally, the self-moving cleaning device 100 may rotate around the z-axis. In the forward direction of the self-moving cleaning device 100, it is referred to as "turning right" when the self-moving cleaning device 100 tilts to the right of the y-axis, and it is referred to as "turning left" when the self-moving cleaning device 100 tilts to the left of the y-axis.

As shown in FIG. 2, visual sensors are arranged on the body 110, and in front and rear of the driving wheel assembly 141. These visual sensors are configured to capture images around the self-moving cleaning device 100 to prevent the self-moving cleaning device 100 from falling during backward movement, thereby avoiding damage to the self-moving cleaning device 100. The aforementioned "front" refers to a side the same as the traveling direction of the self-moving cleaning device 100, and the aforementioned "rear" refers to a side opposite to the traveling direction of the self-moving cleaning device 100. It can be understood that the positions and number of the visual sensors can be set as needed.

Various components in the perception apparatus 120 may operate independently, or operate together to achieve a purpose function more accurately. The surface to be cleaned is identified by the visual sensors and the laser sensor to determine physical characteristics of the surface to be cleaned, including a surface material, a degree of cleanliness, and the like, which may be determined more accurately in combination with the visual sensors, the laser sensor, and the like.

The forward portion 111 of the mobile platform 110 is provided with the buffer 122. During cleaning, when the driving wheel assembly 141 propels the self-moving cleaning device 100 to travel on the ground, the buffer 122 detects one or more events (or objects) in a traveling path of the self-moving cleaning device 100 via a sensor system, e.g., an infrared sensor. The self-moving cleaning device 100, upon detection of an event (or object) such as an obstacle or wall by the buffer 122, may respond to the event (or object), for example moving away from the obstacle or crossing the obstacle, by controlling the driving wheel assembly 141.

The control module 160 is arranged on a main circuit board inside the body 110, and includes a computing processor such as a central processing unit and an application processor, that communicates with a non-transitory storage medium such as a hard disk, a flash memory and a random access memory. The application processor is configured to receive environmental information sensed by the plurality of sensors and transmitted from the perception apparatus 120. Also, the control module 160 may also determine whether to activate the cleaning module to perform a cleaning operation based on the environmental information and the environmental map.

Specifically, the control module 160 can comprehensively determine a current operation state of the ground sweeping robot, such as crossing a doorsill, moving onto a carpet, being at a cliff, being stuck from above or below, having a full dust bin, being picked up or the like by combining distance information and speed information which are fed back by the buffer 122, and the sensing devices such as the visual sensors, the laser sensor, the infrared sensor, the magnetometer, the accelerometer, the gyroscope and the odometer. In addition, it also gives specific next action strategies for different situations, such that the operation of the self-moving cleaning device 100 is more in line with requirements of an owner, providing better user experience. Also, the control module 160 can plan the most efficient and reasonable running path and running mode based on real-time map information derived by SLAM (Simultaneous Localization and Mapping), greatly improving the operation efficiency of the self-moving cleaning device 100.

The driving apparatus 140 may perform a driving command based on specific distance and angle information, such as x, y, and theta components, to manipulate the self-moving cleaning device 100 to travel across the ground. In order for the self-moving cleaning device 100 to move on the ground more stably or have a higher movement ability, the self-moving cleaning device 100 may include one or more steering assemblies. The steering assembly may be a driven wheel 142 or a driving wheel, and structurally includes but is not limited to a universal wheel. The steering assembly may be located in front of the driving wheel assembly 141.

The driving wheel assembly 141 may be detachably connected to the body 110 to facilitate assembly, disassembly and maintenance. The driving wheel may have a biased drop-type suspension system, movably fastened, for example, rotatably attached to the body 110 of the self-moving cleaning device 100, and maintains contact and traction with the ground through an elastic element such as a tension spring or compression spring with a certain gripping force, while the cleaning module of the self-moving cleaning device 100 is also in contact with the surface to be cleaned with a certain pressure. The cleaning module may include a dry cleaning module and/or a wet cleaning module.

The energy system includes a rechargeable battery, such as a nickel-metal hydride battery and a lithium battery. The rechargeable battery may be connected to a charging control circuit, a battery pack charging temperature detection circuit, and a battery undervoltage monitoring circuit, wherein the charging control circuit, the battery pack charging temperature detection circuit and the battery undervoltage monitoring circuit are then connected to a single-chip microcomputer control circuit. The main unit is charged by connecting to a charging dock via charging electrodes arranged on a side or at the bottom of the body 110.

The human-machine interaction system 130 includes buttons that are on a panel of the main unit and used by a user to select functions. The human-machine interaction system 130 may also include a display screen and/or an indicator light and/or a horn that present a current state or function selection items of the self-moving cleaning device to the user. The human-machine interaction system 130 may also include a mobile client program.

The cleaning system 150 includes a wet cleaning system, that is, the automatic cleaning device may be a mopping machine. Or, the cleaning system 150 includes a wet cleaning system and a dry cleaning system 151, that is, the automatic cleaning device is a sweeping and mopping integrated machine.

The dry cleaning system 151 may include a rolling brush, a dust bin, a dust suction fan, and an air outlet. The rolling brush having a certain interference with the ground sweeps up garbage on the ground and rolls up the garbage to the front of a dust suction inlet between the rolling brush and the dust bin, and then the garbage is sucked into the dust bin by air having a suction force, which is generated by the suction fan and passes through the dust bin. The dry cleaning system 151 may also include a side brush 152 having a rotary shaft angled relative to the ground, for moving debris into an area of the rolling brush of the cleaning system 150.

The wet cleaning system may include: a cleaning assembly, a water delivery mechanism, a liquid storage tank, and the like. The cleaning assembly may be arranged below the liquid storage tank, and a cleaning liquid in the liquid storage tank is transported to the cleaning assembly by the water delivery mechanism, such that the cleaning assembly can perform wet cleaning on a plane to be cleaned. The cleaning liquid in the liquid storage tank may also be directly sprayed on the plane to be cleaned, and the cleaning assembly achieves cleaning of the plane by spreading the cleaning liquid evenly. Or, the self-moving cleaning device 100 is provided with a water outlet communicated with the liquid storage tank, through which the liquid in the liquid storage tank can be transported to the cleaning assembly.

As shown in FIG. 2, the cleaning assembly includes at least one cleaning element 153 rotatable relative to the body 110. It should be noted that the cleaning assembly also includes a motion mechanism. The entire cleaning assembly may be mounted on the body 110 through the motion mechanism, and the cleaning assembly moves with the movement of the body 110 to achieve the mopping function. The motion mechanism is configured to drive the cleaning element 153 to act. For example, the motion mechanism can drive the cleaning element 153 to raise or lower, and the motion mechanism can also drive the cleaning element 153 to rotate. Thus, according to the requirement of whether the cleaning element 153 needs to be in contact with the surface to be cleaned, the raising, lowering and rotating operations of the cleaning element 153 can be achieved through the motion mechanism to meet different functional requirements of the cleaning element 153. It should be noted that when the cleaning element 153 interferes with the surface to be cleaned for the mopping operation, the motion mechanism drives the cleaning element 153 to perform the rotating operation.

As shown in FIG. 2, in the forward direction of the self-moving cleaning device 100, the cleaning element 153 is located at the rear of the dry cleaning system 151. The cleaning element 153 may usually be a water-absorbing flexible material such as fabric or sponge. In this solution, the cleaning element 153 may be at least one rotating disc. Water from the liquid storage tank of the self-moving cleaning device 100 is directed to the cleaning element 153. The moistened cleaning element 153 removes stains on the ground through rotational motion. Specifically, as shown in FIGs. 1 and 2, the cleaning element 153 includes two rotating discs arranged on the left and right sides along the forward direction of the body 110.

As shown in FIG. 2, at least a portion of the cleaning element 153 is located outside the edge projection area of the body 110. That is, at least a portion of the cleaning element 153 protrudes from the body 110, such that the cleaning range of the cleaning element 153 can extend beyond the edge of the walking range of the mobile platform, thereby achieving comprehensive cleaning of corner positions that the body 110 cannot fit, improving the cleaning range of the cleaning element 153, and improving the cleaning effect of the automatic cleaning device.

However, since at least a portion of the cleaning element 153 protrudes from the body 110, in the traveling process of the self-moving cleaning device 100, for example, in the turning process of the self-moving cleaning device 100, there may be a scenario where the body 110 of the self-moving cleaning device does not collide with an obstacle, but continued turning could cause the cleaning element 153 to be in contact with the obstacle, thereby adversely affecting the smoothness of the operation of the self-moving cleaning device 100.

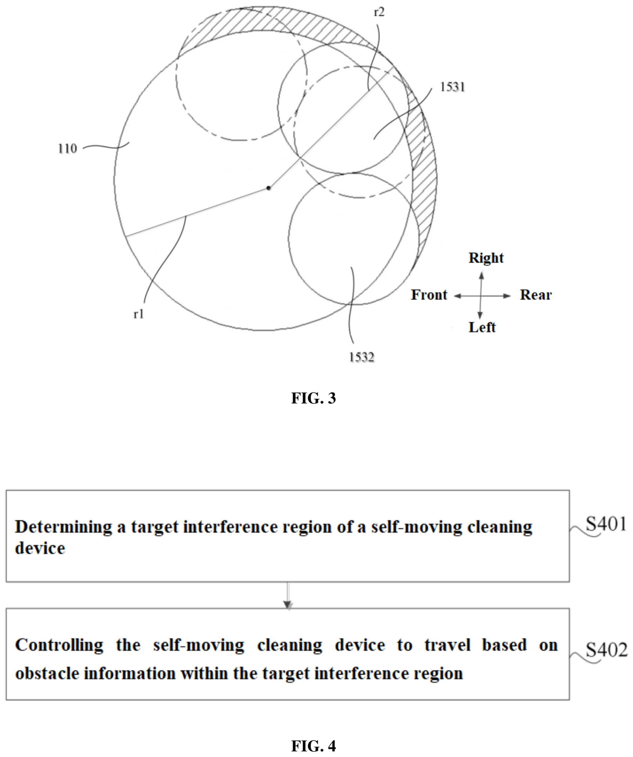

In view of this, an embodiment of the present disclosure provides a control method of a self-moving cleaning device. As shown in FIG. 4, the method includes the following steps.

In step S401, a target interference area of the self-moving cleaning device is determined.

When the self-moving cleaning device 100 performs autonomous exploration in an environmental space, based on the SLAM (Simultaneous Localization and Mapping) algorithm, localization and mapping may be performed through the movement and measurement of the self-moving cleaning device 100 to obtain a map of the space where the self-moving cleaning device 100 is located. The map of the space where the self-moving cleaning device 100 is located is configured to provide detailed environmental feature data, is suitable for spatial representation in an unstructured environment, and serves as an important basis for navigation and route planning of the self-moving cleaning device 100.

The target interference area may be an area in the space where the self-moving cleaning device 100 is located that may adversely affect the smooth traveling of the self-moving cleaning device 100. For example, an obstacle within the target interference area can adversely affect the smooth traveling of the self-moving cleaning device 100. Even if the obstacle within the target interference area is currently not in contact with the body 110, nor with the cleaning element 153, due to the fact that at least a portion of the cleaning element 153 protrudes from the body 110 in the embodiments of the present disclosure, if the self-moving cleaning device 100 continues to operate (e.g., the self-moving cleaning device 100 executing a turning operation), there is a risk of interference and collision between the cleaning element 153 and the obstacle within the target interference area, thereby adversely affecting the smooth traveling of the self-moving cleaning device 100. Thus, when the self-moving cleaning device 100 is in operation, determining the target interference area of the self-moving cleaning device 100 can provide a basis for judging whether an obstacle will affect the smooth travelling of the self-moving cleaning device 100, such that the possibility of interference and collision between the cleaning element 153 of the self-moving cleaning device 100 and the obstacle can be reduced, thereby enabling the self-moving cleaning device 100 to travel smoothly.

In a specific embodiment, the body 110 of the self-moving cleaning device 100 is circular; and determining the target interference area of the self-moving cleaning device 100 includes:
determining the target interference area based on a structure of the self-moving cleaning device and a position of the self-moving cleaning device in a space where it is located, wherein the structure of the self-moving cleaning device includes a radius of the body, and the maximum distance between an outer edge of the cleaning element located outside the edge projection area of the body and a rotation center of the body.

As shown in FIG. 3, the body 110 is circular, the body 110 has a radius r1, and r1 characterizes the distance between the outer edge of the body 110 and the rotation center of the body 110. The maximum distance between the outer edge of the cleaning element 153 located outside the edge projection area of the body 110 and the rotation center of the body 110 is r2. Since r1 and r2 are concentric, the circle corresponding to r2 will have an extra annular area compared to the circle corresponding to r1, and the cleaning element 153 is located at the rear of the body 110, with a portion protruding from the body 110. Therefore, when the obstacle is within an annular area at the rear half of the body 110, the distance between the obstacle and the cleaning element 153 is relatively short. There is a possibility that if the self-moving cleaning device 100 continues to turn, the portion of the cleaning element 153 protruding from the body 110 may collide with the obstacle. Thus, a potential interference area is determined by excluding a projection portion of the cleaning element 153 from a portion located behind the body 110 in an annular area formed by the difference between the circle corresponding to r2 and the circle corresponding to r1. Specifically, the potential interference area may be shown as the shaded portion in FIG. 3. It should be noted that after the structure of the self-moving cleaning device 100 is determined, such as the size of the body 110, the size of the cleaning element 153, and the position of the cleaning element 153 relative to the body 110, the potential interference area may also be determined.

During the movement process of the self-moving cleaning device 100, the body 110 and the cleaning element 153 move synchronously. In other words, the potential interference area of the self-moving cleaning device 100 will move along with the movement of the self-moving cleaning device 100 within the spacial map. Therefore, based on the position of the self-moving cleaning device 100 in the space where it is located, the corresponding area of the potential interference area of the self-moving cleaning device 100 at this position in the map of the space where it is located is determined as the target interference area, such that the target interference area is associated with the position in the space where it is located. This facilitates subsequent determination of the positional relationship between obstacles around the self-moving cleaning device 100 and the target interference area based on the perception information of the perception apparatus, so as to accurately judge whether the obstacle will adversely affect the smooth traveling of the self-moving cleaning device 100.

In actual usage scenarios, a detection apparatus of the self-moving cleaning device 100 includes a laser ranging apparatus located at the top of the body 110 of the self-moving cleaning device 100. This laser ranging apparatus can detect the distance between the self-moving cleaning device 100 and a surrounding obstacle, and then the position information of the self-moving cleaning device 100 within the spatial map where it is located can be determined. It can be understood that the distance between the self-moving cleaning device and the surrounding obstacle may also be measured via other sensors in the detection apparatus to determine the position of the self-moving cleaning device 100 in the spatial map. Thus, the control module 160 can determine the target interference area based on the structure of the self-moving cleaning device 100 and the position, determined by the perception apparatus, of the self-moving cleaning device 100 in the space where it is located.

In step S402, the self-moving cleaning device is controlled to travel based on obstacle information within the target interference area.

In the present embodiment, since the obstacle is located within the target interference area, there may a phenomenon that the portion of the cleaning element 153 protruding from the body 110 collides with the obstacle when the self-moving cleaning device 100 performs a turning operation. Therefore, by controlling the traveling of the self-moving cleaning device 100 based on the obstacle information within the target interference area, the self-moving cleaning device 100 can avoid the obstacle and travel smoothly.

In other words, in the control method of the self-moving cleaning device 100 provided by the present disclosure, by determining the target interference area of the self-moving cleaning device 100 during its operation process, obstacles within which area ranges that would affect the smooth traveling of the self-moving cleaning device 100 can be identified. Therefore, controlling the driving apparatus 140 to drive the self-moving cleaning device 100 to travel based on the obstacle information within the target interference area can reduce or avoid interference between the cleaning element 153 protruding from the body 110 of the self-moving cleaning device 100 and an obstacle, thereby enhancing the obstacle avoidance experience of the self-moving cleaning device 100 and improving the operational smoothness of the self-moving cleaning device 100.

In actual usage scenarios, the self-moving cleaning device 100 can detect the distance between itself and a surrounding obstacle by using the perception apparatus. Specifically, the laser ranging apparatus located at the top of the body 110 may be employed to detect the distance between the self-moving cleaning device 100 and the surrounding obstacle. Based on the determined target interference area and the perceived information, the control module 160 can determine the positional relationship between the obstacle and the target interference area, for example, can determine whether the obstacle is located within the target interference area or determine that the obstacle is not located within the target interference area.

Also, as a refinement and extension of the specific implementation of the above embodiment, to completely illustrate the specific implementation process of the present embodiment, controlling the self-moving cleaning device to travel based on the obstacle information within the target interference area may include the following steps.

In step S501, when there is an obstacle within the target interference area, a relative position between the obstacle and the self-moving cleaning device is determined.

In step S502, the self-moving cleaning device is controlled to perform a corresponding obstacle avoidance operation based on the relative position.

In this embodiment, when there is an obstacle within the target interference area, it indicates that the distance between the obstacle and the self-moving cleaning device 100 is relatively short. Specifically, the obstacle may be relatively close to the body 110, or may be relatively close to the cleaning element 153. If the self-moving cleaning device 100 continues advancing toward the obstacle, there may be a phenomenon where the self-moving cleaning device 100 interferes and collides with the obstacle. Therefore, the specific positional relationship between the obstacle and the self-moving cleaning device 100 is clearly defined by also determining the relative position of the obstacle and the self-moving cleaning device 100. The self-moving cleaning device 100 is controlled to perform the corresponding obstacle avoidance operation based on the relative position, such that the self-moving cleaning device 100 can move in the correct direction. This enables the target interference area to move away from the obstacle and make the obstacle exit the target interference area, thereby increasing the distance between the self-moving cleaning device 100 and the obstacle. On this basis, executing a turning operation afterward can effectively reduce or avoid the possibility of the cleaning element 153 protruding from the body 110 interfering with the obstacle, thereby improving the smoothness of the self-moving cleaning device 100 in executing the predetermined turning operation.

The obstacle exiting the target interference area means that the obstacle is not located within the target interference area. Due to the operation of the self-moving cleaning device 100, the position of the target interference area in the space where the self-moving cleaning device 100 is located may change. Thus, when the self-moving cleaning device 100 moves away from the obstacle, the obstacle can exit the target interference area.

It can be understood that when there is no obstacle within the target interference area, it indicates that the distance between the obstacle and the self-moving cleaning device 100 is relatively long. If the distance between the obstacle and the cleaning element 153 is relatively long, the continued operation of the self-moving cleaning device 100 is unlikely to encounter a problem that the obstacle interferes and collides with the cleaning element 153. Thus, the self-moving cleaning device 100 can be controlled to directly perform the turning operation.

In some possible embodiments provided by the present disclosure, the cleaning element 153 is arranged at the rear of the body 110. Here, there may be one, two or multiple cleaning elements 153. As shown in FIG. 3, the number of the cleaning elements 153 is two, and the two cleaning elements 153 are both located at the rear of the body 110.

Also, as a refinement and extension of the specific implementation of the above embodiment, to completely illustrate the specific implementation process of the present embodiment, controlling the self-moving cleaning device to perform the corresponding obstacle avoidance operation based on the relative position may include the following steps.

In step S601, when the obstacle is located at one side of the self-moving cleaning device and the self-moving cleaning device performs a turning operation toward a side opposite to the obstacle, a reachable area of the self-moving cleaning device is acquired based on a map of the space where the self-moving cleaning device is located.

In step S602, a rotation direction and a rotation angle of the self-moving cleaning device are determined based on the reachable area, and the self-moving cleaning device is controlled to perform a backward operation after rotating according to the rotation direction and the rotation angle to enable the obstacle to exit the target interference area.

When an obstacle is located at one side of the self-moving cleaning device, all cleaning elements 153 are located on the same side of the obstacle accordingly. As shown in FIG. 3, all cleaning elements 153 are located on the right side of the obstacle, or, all cleaning elements 153 are located on the left side of the obstacle. When the obstacle is located in a shaded area above in FIG. 3, it indicates that all cleaning elements 153 are located on the left side of the obstacle, that is, the obstacle is located on the right side of the self-moving cleaning device 100. It should be noted that in this case, the number of the cleaning element(s) 153 may be one or two.

When an obstacle is located at one side of the self-moving cleaning device 100, and the self-moving cleaning device 100 performs a turning operation toward a side opposite to the obstacle, in other words, the direction of the obstacle relative to the self-moving cleaning device 100 is opposite to the rotation direction of the turning operation to be performed by the self-moving cleaning device 100, specifically, taking the self-moving cleaning device 100 executing a left turning as an example, in this case, the obstacle is located on the right side of the self-moving cleaning device 100. If the self-moving cleaning device 100 directly performs the left turning operation, the cleaning element 153 protruding from the body 110 at the rear of the self-moving cleaning device 100 will move to the right, that is, the cleaning element 153 moves towards the obstacle, which will pose a problem that the cleaning element 153 protruding from the body 110 interferes and collides with the obstacle. It should be noted that when the self-moving cleaning device 100 performs a right turning operation, if the obstacle is located on the left side of the self-moving cleaning device 100, that is, the direction of the obstacle relative to the self-moving cleaning device 100 is opposite to the rotation direction of the turning operation performed by the self-moving cleaning device 100, there will similarly be the problem that directly performing the right turning causes the cleaning element 153 to interfere and collide with the obstacle.

The reachable area of the self-moving cleaning device 100 may be an area that the self-moving cleaning device 100 can reach in the map of the space where it is located. The reachable area determined based on the map of the space where the self-moving cleaning device is located may record an area covered by the self-moving cleaning device 100 during the current operation and an area covered during a previous operation of the self-moving cleaning device 100, and may also include an area not yet covered but reachable by the self-moving cleaning device 100. In actual usage scenarios, the control module 160 can determine the reachable area of the self-moving cleaning device 100 based on the information detected by the detection apparatus.

Thus, the rotation direction and the rotation angle of the self-moving cleaning device 100 are determined based on the reachable area of the self-moving cleaning device 100, such that the self-moving cleaning device 100 can be guided to travel to the reachable area according to the rotation direction and the rotation angle determined based on the reachable area. After the self-moving cleaning device 100 is controlled to rotate based on the rotation direction and the rotation angle, the driving apparatus 140 is controlled to drive the self-moving cleaning device 100 to perform a backward operation. Since the rotation direction and the rotation angle are determined based on the reachable area of the self-moving cleaning device 100, the self-moving cleaning device 100 executing the rotation and then the backward operation can ensure the smooth backward movement of the self-moving cleaning device 100, which reduces the possibility of the self-moving cleaning device 100 interfering and colliding with other obstacles in the backward process. When the control module 160 controls the driving apparatus 140 to drive the self-moving cleaning device 100 to rotate and then perform a backward operation until the obstacle exits the target interference area, it indicates that the obstacle is no longer within the target interference area of the self-moving cleaning device 100, and the distance between the obstacle and the portion of the cleaning element 153 protruding from the body 110 is relatively long, which can reduce or avoid the possibility of interference between the cleaning element 153 and the obstacle. Thus, it is convenient for the self-moving cleaning device 100 to smoothly perform the turning operation.

In actual usage scenarios, it can be determined that the obstacle has exited the target interference area based on the perception information of the perception apparatus.

The rotation direction determined based on the reachable area may be the same as the rotation direction of the turning operation performed by the self-moving cleaning device 100, or may be opposite to the rotation direction of the turning operation. For example, if the turning operation performed by the self-moving cleaning device 100 is a left turn, the rotation direction determined based on the reachable area may be either a left turn or a right turn.

Also, as a refinement and extension of the specific implementation of the above embodiment, to completely illustrate the specific implementation process of the present embodiment, controlling the self-moving cleaning device to perform the corresponding obstacle avoidance operation based on the relative position may also include the following step.

In step S603, the self-moving cleaning device is enabled to rotate back to an original angle and perform the turning operation.

The self-moving cleaning device 100 rotating back to the original angle refers to controlling the driving apparatus 140 to drive the self-moving cleaning device 100 to rotate by the rotation angle determined based on the reachable area in the reverse direction of the rotation direction determined based on the reachable area, thereby achieving the operation of rotating the self-moving cleaning device 100 back to the original angle.

In this embodiment, since the driving apparatus 140 drives the self-moving cleaning device 100 to perform, prior to a backward movement, a rotation operation according to the rotation direction and the rotation angle determined based on the reachable area, after the self-moving cleaning device 100 rotates and moves backward to cause the obstacle to exit the target interference area, prior to executing the turning operation step, the control module 160 controls the driving apparatus 140 to drive the self-moving cleaning device 100 to rotate back to the original angle. That is, after the driving apparatus 140 drives the self-moving cleaning device to rotate in the reverse direction of the rotation direction determined based on the reachable area by the rotation angle determined based on the reachable area, the self-moving cleaning device 100 performs the turning operation. This is conducive to ensuring that during the execution of the turning operation by the self-moving cleaning device 100, the possibility of collision between the cleaning element 153 protruding from the body 110 and the obstacle can be reduced or avoided, thereby ensuring that the self-moving cleaning device 100 can smoothly perform the rotation operation.

In some possible embodiments provided by the present disclosure, as shown in FIG. 3, a plurality of cleaning elements 153 is symmetrically arranged at the rear of the body 110. Specifically, the number of the cleaning elements 153 may be two. The two cleaning elements 153 are arranged at the bottom rear of the body 110 along the left-right direction of the body 110. Specifically, the two cleaning elements 153 include a first cleaning element 1531 located at the right rear side of the body 110 and a second cleaning element 1532 located at the left rear side of the body 110. The left-right direction is as shown in FIG. 3.

Also, as a refinement and extension of the specific implementation of the above embodiment, to completely illustrate the specific implementation process of this embodiment, controlling the self-moving cleaning device to perform the corresponding obstacle avoidance operation based on the relative position may include the following steps.

In step S701, when the obstacle is located behind the self-moving cleaning device and the self-moving cleaning device performs a turning operation, a reachable area of the self-moving cleaning device is acquired based on a map of the space where the self-moving cleaning device is located.

In step S702, when the reachable area is located in front of the self-moving cleaning device, the self-moving cleaning device is enabled to travel forward to cause the obstacle to exit the target interference area, otherwise, a rotation direction and a rotation angle of the self-moving cleaning device are determined based on the reachable area, and the self-moving cleaning device is controlled to perform a forward operation after rotating according to the rotation direction and the rotation angle to enable the obstacle to exit the target interference area.

In this embodiment, when an obstacle is located behind the self-moving cleaning device 100, it indicates that the obstacle is located between the two cleaning elements 153. In this case, if the self-moving cleaning device 100 directly performs a turning operation, there is a possibility of interference and collision between the portion of one cleaning element 153 protruding from the body 110 and the obstacle. As shown in FIG. 3, when the turning operation performed by the self-moving cleaning device 100 is a left turn, during the left turning operation, the second cleaning element 1532 located on the left side will gradually approach the obstacle and collide with it. As shown in FIG. 3, when the turning operation performed by the self-moving cleaning device 100 is a right turn, during the right turning operation, the first cleaning element 1531 located on the right side will gradually approach the obstacle and collide with it.

Therefore, based on the map of the space where the self-moving cleaning device 100 is located, the reachable area of the self-moving cleaning device 100 is acquired to determine an area that can be smoothly and unimpededly reached by the self-moving cleaning device 100 from its current position. Then, the position of the reachable area relative to the self-moving cleaning device 100 is judged. When the reachable area is located in front of the self-moving cleaning device 100, it indicates that the self-moving cleaning device 100 can move forward directly. In this case, the driving apparatus 140 is controlled to drive the self-moving cleaning device 100 to move forward. During the forward movement of the self-moving cleaning device 100, the target interference area will move forward accordingly, causing the target interference area to move away from the obstacle until the control module 160 determines based on the perception information of the perception apparatus that the obstacle has exited the target interference area, which indicates that the distance between the cleaning element 153 and the obstacle is sufficiently long. In this case, the control module 160 controls the driving apparatus 140 to perform the turning operation again, which can ensure the smooth execution of the turning operation. That is, during the turning operation performed after the obstacle has exited the target interference area, the cleaning elements 153 will not interfere or collide with the obstacle.

When the reachable area is not located in front of the self-moving cleaning device 100, it indicates that the self-moving cleaning device 100 cannot move forward. For example, obstacles, stairs, or the like in front of the self-moving cleaning device 100 block its forward movement. Thus, the rotation direction and the rotation angle of the self-moving cleaning device 100 are determined based on the reachable area of the self-moving cleaning device 100, such that the self-moving cleaning device 100 is guided to travel, according to the rotation direction and the rotation angle determined based on the reachable area, to an area it can reach. After the self-moving cleaning device 100 is controlled to rotate based on the rotation direction and the rotation angle, the driving apparatus 140 is controlled to drive the self-moving cleaning device 100 to perform a forward operation. Since the obstacle is located behind the self-moving cleaning device 100 and the rotation direction and the rotation angle are determined based on the reachable area of the self-moving cleaning device 100, the self-moving cleaning device 100 executing the rotation and then the forward operation can ensure the smooth forward movement of the self-moving cleaning device 100, which reduces the possibility of the self-moving cleaning device 100 interfering and colliding with other obstacles in the forward process.

When the control module 160 controls the driving apparatus 140 to drive the self-moving cleaning device 100 to rotate and then perform a forward operation until it is determined based on the perception information of the perception apparatus that the obstacle exits the target interference area, it indicates that the obstacle is no longer within the target interference area of the self-moving cleaning device 100, and the distance between the obstacle and the portion of the cleaning element 153 protruding from the body 110 is relatively long, which can reduce or avoid the possibility of interference between the cleaning element 153 and the obstacle. Thus, it is convenient for the self-moving cleaning device 100 to smoothly perform the turning operation.

The rotation direction determined based on the reachable area may be the same as or opposite to the rotation direction of the turning operation performed by the self-moving cleaning device. For example, if the turning operation performed by the self-moving cleaning device 100 is a left turn, the rotation direction determined based on the reachable area may be either a left turn or a right turn. Specifically, by reasonably setting the program of the control apparatus, the rotation direction determined based on the reachable area may be optionally the same as the rotation direction of the turning operation performed by the self-moving cleaning device 100. For example, if the turning operation performed by the self-moving cleaning device 100 is a left turn, the rotation direction determined based on the reachable area may be selected as left. It can be understood that the rotation direction determined based on the reachable area may also be selected as right.

In actual usage scenarios, whether the self-moving cleaning device 100 can move forward can be determined based on the perception information of the perception apparatus. For example, when the perception information of the perception apparatus indicates that the distance between the self-moving cleaning device 100 and an obstacle ahead it is relatively short, or there are stairs in front of the body 110, or a collision sensor in the perception apparatus is triggered, it indicates that the self-moving cleaning device 100 cannot travel forward.

Also, as a refinement and extension of the specific implementation of the above embodiment, to completely illustrate the specific implementation process of the present embodiment, controlling the self-moving cleaning device to perform the corresponding obstacle avoidance operation based on a relative position specifically also includes the following step.

In step S704, if the obstacle is still located within the target interference area, after the self-moving cleaning device is controlled to perform the forward operation after rotating according to the rotation direction and the rotation angle, a rotation direction and a rotation angle of the self-moving cleaning device are re-determined based on the reachable area, and the self-moving cleaning device is controlled to perform a forward operation after rotating according to the re-determined rotation direction and rotation angle to enable the obstacle to exit the target interference area.

In this embodiment, if after the control module 160 controls the driving apparatus140 to drive the self-moving cleaning device 100 to rotate in the rotation direction determined based on the reachable area by the rotation angle determined based on the reachable area and the self-moving cleaning device travels forward a certain distance, the obstacle is still within the target interference area. This indicates that the self-moving cleaning device 100 has only moved a relatively short distance forward before stopping and cannot continue moving forward. For example, after the self-moving cleaning device 100 rotates and moves forward a relatively short distance, a new obstacle or a cliff feature such as stairs may exist in front of the self-moving cleaning device 100, which blocks the self-moving cleaning device 100 from continuing moving forward in its current state. In addition, the obstacle originally located within the target interference area is still located within this area. In this case, if the self-moving cleaning device 100 directly performs a turning operation, interference between the self-moving cleaning device 100 and the obstacle will still occur. Therefore, based on the current position of the self-moving cleaning device 100, the rotation direction and the rotation angle of the self-moving cleaning device 100 are re-determined based on the reachable area, such that the self-moving cleaning device 100 is guided to travel to the area it can reach according to the rotation direction and the rotation angle re-determined based on the reachable area. After the self-moving cleaning device 100 is controlled to rotate according to the re-determined rotation direction and rotation angle, the driving apparatus 140 is controlled to drive the self-moving cleaning device 100 to perform a forward operation. Since the obstacle is located behind the self-moving cleaning device 100 and the rotation direction and the rotation angle are determined based on the reachable area of the self-moving cleaning device 100, the self-moving cleaning device 100 executing the rotation and then the forward operation can ensure the smooth forward movement of the self-moving cleaning device 100, which reduces the possibility of the self-moving cleaning device 100 interfering and colliding with other obstacles in the forward process. When the control module 160 controls the driving apparatus 140 to drive the self-moving cleaning device 100 to rotate and then perform a forward operation until it is determined based on the perception information of the perception apparatus that the obstacle exits the target interference area, it indicates that the obstacle is no longer within the target interference area of the self-moving cleaning device 100, and the distance between the obstacle and the portion of the cleaning element 153 protruding from the body 110 is relatively long, which can reduce or avoid the possibility of interference between the cleaning element 153 and the obstacle. Thus, it is convenient for the self-moving cleaning device 100 to smoothly perform the turning operation.

The rotation direction re-determined based on the reachable area may be the same as or opposite to the rotation direction previously determined based on the reachable area. Or, the rotation direction re-determined based on the reachable area may be the same as or opposite to the rotation direction of the turning operation performed by the self-moving cleaning device 100. Specifically, by reasonably setting the program of the control apparatus, the rotation direction re-determined based on the reachable area may be optionally opposite to the rotation direction last determined based on the reachable area. For example, if the rotation direction last determined based on the reachable area is left, the rotation direction re-determined based on the reachable area may be right. It can be understood that the rotation direction re-determined based on the reachable area may also be left.

Also, as a refinement and extension of the specific implementation of the above embodiment, to completely illustrate the specific implementation process of the present embodiment, controlling the self-moving cleaning device to perform the corresponding obstacle avoidance operation based on a relative position specifically also includes the following step.

In step S705, if the obstacle is still located within the target interference area, after the step that the self-moving cleaning device is controlled to perform a forward operation after rotating according to the re-determined rotation direction and rotation angle is repeated multiple times, a rotation direction of the cleaning elements is adjusted to enable the rotation direction of the cleaning elements to be the same as a turning direction of the turning operation, or the cleaning element is controlled to stop rotating and the self-moving cleaning device is controlled to perform the turning operation until the obstacle exits the target interference area.

Here, repeating multiple times may refer to repetition twice, three times or any other number of times. The repeatedly performed operation includes: re-determining the rotation direction and the rotation angle based on the reachable area, and controlling the driving apparatus 140 to drive the self-moving cleaning device 100 to perform the forward operation after rotating according to the re-determined rotation direction and rotation angle. It should be noted that if after the forward operation stops, the obstacle is still located within the target interference area, the process that the rotation direction and the rotation angle are re-determined based on the reachable area and the driving apparatus 140 is controlled to drive the self-moving cleaning device 100 to perform the forward operation after rotating according to the re-determined rotation direction and the rotation angle is performed again, and this cycle continues iteratively. It can be understood that the rotation direction and the rotation angle determined each time based on the reachable area may be identical or different, and are primarily determined based on the reachable area and the current state of the self-moving cleaning device 100, which are not specifically limited in the present disclosure.

In this embodiment, if after the control module 160 repeats the step of re-determining the rotation direction and the rotation angle based on the reachable area and controlling the driving apparatus 140 to drive the self-moving cleaning device 100 to perform the forward operation after rotating according to the re-determined rotation direction and rotation angle for multiple times, the obstacle is still located within the target interference area, which indicates that the cleaning element 153 protruding from the body 110 of the self-moving cleaning device 100 may interfere and collide with the obstacle, preventing forward traveling of the self-moving cleaning device 100. In this case, the control module 160 may adjust the rotation direction of the cleaning element 153 to enable the rotation direction of the cleaning element 153 to be the same as the turning direction of the predetermined turning operation. Specifically, the control module 160 may adjust working parameters of the motion mechanism to adjust the rotation direction of the cleaning element 153. For example, the predetermined rotation direction of the self-moving cleaning device 100 is clockwise relative to the body 110, if the cleaning element 153 is currently rotating counterclockwise, the control module 160 can control a motor of the motion mechanism to reverse its rotation, so as to adjust the rotation direction of the cleaning element 153 to be clockwise. Or, the control module 160 can control the motor of the motion mechanism to stop working, causing the cleaning element 153 to stop rotating, that is, the cleaning element 153 is inactive. Subsequently, the control module 160 controls the driving apparatus 140 to drive the self-moving cleaning device 100 to perform the turning operation. In this way, since the rotation direction of the cleaning element 153 is the same as the rotation direction of the turning operation of the self-moving cleaning device 100, the cleaning element 153 can provide power to assist the self-moving cleaning device 100 in escaping the trapped conditions. Or, since the cleaning element 153 does not rotate, the cleaning element 153 can reduce resistance for the self-moving cleaning device 100 to escape the trapped conditions, thereby facilitating the smooth escape of the self-moving cleaning device 100 from the obstacle. This process continues until the obstacle exits the target interference area. It indicates that the distance between the cleaning element 153 and the obstacle is sufficiently long, and the self-moving cleaning device 100 escapes the obstacle and performs the turning operation.

Also, as a refinement and extension of the specific implementation of the above embodiment, to completely illustrate the specific implementation process of the present embodiment, controlling the self-moving cleaning device to perform the corresponding obstacle avoidance operation based on a relative position specifically also includes the following step.

In step S706, the self-moving cleaning device performs the turning operation after the obstacle exits the target interference area.

Since the obstacle has exited the target interference area, it indicates that the distance between the cleaning element 153 and the obstacle is sufficiently long. In this case, controlling the driving apparatus 140 to perform the turning operation can ensure the smooth execution of the turning operation. That is, the cleaning element 153 will not interfere or collide with the obstacle during the turning operation process.

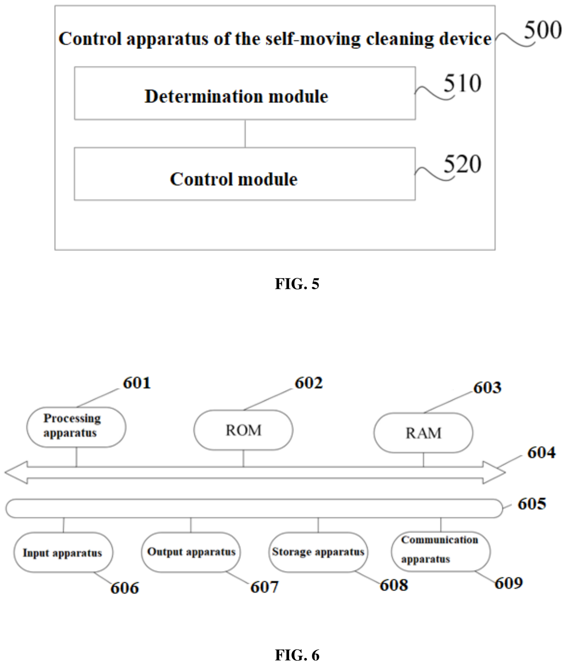

Also, as shown in FIG. 5, as a specific implementation of the above control method of the self-moving cleaning device, an embodiment of the present disclosure provides a control apparatus 500 of the self-moving cleaning device. The self-moving cleaning device includes: a body and a cleaning element arranged at the bottom of the body, at least a portion of the cleaning element being located outside an edge projection area of the body. The control apparatus 500 of the self-moving cleaning device includes a determination module 510 and a control module 520.

The determination module 510 is configured to determine a target interference area of the self-moving cleaning device. The control module 520 is configured to control the self-moving cleaning device to travel based on obstacle information within the target interference area.

In this embodiment, during the operation of the self-moving cleaning device, the determination module 510 can determine the target interference area of the self-moving cleaning device, and then obstacles within which area ranges that would affect the smooth traveling of the self-moving cleaning device can be identified. Therefore, controlling, by the control module 520, the driving apparatus to drive the self-moving cleaning device to travel based on the obstacle information within the target interference area can reduce or avoid interference between the cleaning element protruding from the body of the self-moving cleaning device and an obstacle, thereby enhancing the obstacle avoidance experience of the self-moving cleaning device and improving the operational smoothness of the self-moving cleaning device.

Also, the body is circular; and the determination module is specifically configured to: determine the target interference area based on a structure of the self-moving cleaning device and a position of the self-moving cleaning device in a space where it is located, wherein the structure of the self-moving cleaning device includes a radius of the body, and the maximum distance between an outer edge of the cleaning element located outside the edge projection area of the body and a rotation center of the body.

Also, the control module 520 includes: a relative position determination module configured to: when there is an obstacle within the target interference area, determine a relative position between the obstacle and the self-moving cleaning device; and a processing module configured to control the self-moving cleaning device to perform a corresponding obstacle avoidance operation based on the relative position.

Also, the cleaning element is arranged at the rear of the body. The processing module includes: a first acquisition unit configured to: when the obstacle is located at one side of the self-moving cleaning device and the self-moving cleaning device performs a turning operation toward a side opposite to the obstacle, acquire a reachable area of the self-moving cleaning device based on a map of the space where the self-moving cleaning device is located; and a first processing unit configured to determine a rotation direction and a rotation angle of the self-moving cleaning device based on the reachable area, and control the self-moving cleaning device to perform a backward operation after rotating according to the rotation direction and the rotation angle to enable the obstacle to exit the target interference area.

Also, the processing module also includes: a reset unit configured to control the self-moving cleaning device to rotate back to an original angle and perform the turning operation.

Also, a plurality of the cleaning elements are symmetrically arranged at the rear of the body, and the processing module includes: a second acquisition unit configured to: when the obstacle is located behind the self-moving cleaning device and the self-moving cleaning device performs a turning operation, acquire a reachable area of the self-moving cleaning device based on a map of the space where the self-moving cleaning device is located; and a second processing unit configured to: when the reachable area is located in front of the self-moving cleaning device, enable the self-moving cleaning device to travel forward to cause the obstacle to exit the target interference area, otherwise, determine a rotation direction and a rotation angle of the self-moving cleaning device based on the reachable area, and control the self-moving cleaning device to perform a forward operation after rotating according to the rotation direction and the rotation angle to enable the obstacle to exit the target interference area.

Also, the processing module also includes: a third processing unit configured to: if the obstacle is still located within the target interference area after the self-moving cleaning device is controlled to perform the forward operation after rotating according to the rotation direction and the rotation angle, re-determine a rotation direction and a rotation angle of the self-moving cleaning device based on the reachable area, and control the self-moving cleaning device to perform a forward operation after rotating according to the re-determined rotation direction and rotation angle to enable the obstacle to exit the target interference area.

Also, the processing module also includes: a fourth processing unit configured to: if the obstacle is still located within the target interference area, after the step that the rotation direction and the rotation angle are re-determined based on the reachable area and the self-moving cleaning device is controlled to perform a forward operation after rotating according to the re-determined rotation direction and rotation angle is repeated multiple times, adjust a rotation direction of the cleaning elements to enable the rotation direction of the cleaning elements to be the same as a turning direction of the turning operation, or control the cleaning elements to stop rotating and control the self-moving cleaning device to perform the turning operation until the obstacle exits the target interference area.

Also, the processing module also includes: a fifth processing unit configured to enable the self-moving cleaning device to perform the turning operation after the obstacle exits the target interference area.

It should be noted that other corresponding descriptions of the functional modules involved in the control apparatus 500 of the self-moving cleaning device provided in the embodiment of the present disclosure may refer to the descriptions of the corresponding embodiments of the above method, which will not be repeated herein.

Based on the embodiments of the above control method of the self-moving cleaning device and the control apparatus 500 of the self-moving cleaning device, to achieve the above objects, an embodiment of the present disclosure also provides a self-moving cleaning device. The self-moving cleaning device includes a storage medium and a processor. The storage medium is configured to store a computer program. The processor is configured to perform the computer program to implement the control method of the self-moving cleaning device provided in the above embodiments.

Optionally, the self-moving cleaning device may also include a user interface, a network interface, a camera, a radio frequency (RF) circuit, a sensor, an audio circuit, a WI-FI module, and the like. The user interface may include a display, an input unit such as a keyboard, and the like. Optionally, the user interface may also include a USB interface, a card reader interface, and the like. Optionally, the network interface may include a standard wired interface, a wireless interface (such as a Bluetooth interface and a WI-FI interface), and the like.

It will be understood by those skilled in the art that the structure of the self-moving cleaning device provided by the present embodiment does not constitute a limitation to the self-moving cleaning device. The self-moving cleaning device may include more or less components, or a combination of some components, or the components arranged in a different fashion.

It should be noted that in the exemplary implementation of the present disclosure, a map construction method of the self-moving cleaning device may be implemented by the self-moving cleaning device (e.g., a self-moving mopping cleaning device, a sweeping and mopping integrated machine, etc.). In other words, various steps of the control method of the self-moving cleaning device may be performed by the self-moving cleaning device. In this case, the control apparatus 500 of the self-moving cleaning device may be configured in the self-moving cleaning device.

Based on the method provided by the above embodiments, correspondingly, an embodiment of the present disclosure also provides a storage medium storing a computer program thereon, wherein the program, when performed by a processor, implements the control method of the self-walking robot provided by the above embodiments.

Based on this understanding, the technical solutions of the present disclosure may be embodied in the form of a software product. The software product may be stored in a non-volatile storage medium (which may be a CD-ROM, a USB flash drive, a mobile hard disk, etc.), and includes several instructions to cause a computer device (which may be a personal computer, a server, a network device, or the like) to perform the method described in the various implementation scenarios of the present disclosure.

The storage medium may also include an operating system and a network communication module. The operating system is a program that manages and stores hardware and software resources of the computer device, and supports the running of information processing programs and other software and/or programs. The network communication module is configured to implement communication between various controls inside the storage medium and communication with other hardware and software in the physical device.

As shown in FIG. 6, the self-walking robot may include a processing apparatus 601 (such as a central processing unit, a graphics processing unit, or the like) that may perform various appropriate actions and processing according to a program stored in a read-only memory (ROM 602) or a program loaded from a storage apparatus 608 into a random-access memory (RAM 603). In the RAM 603, various programs and data required for operation of the electronic self-walking robot are also stored. The processing apparatus 601, the ROM 602, and the RAM 603 are connected to each other by using a bus 604. An input/output (I/O) interface is also connected to the bus 604.

Generally, the following apparatuses may be connected to the I/O interface 605: input apparatuses 606 including, for example, a touchscreen, a touchpad, a keyboard, a mouse, a camera, a microphone, an accelerometer, a gyroscope, etc.; output apparatuses 607 including, for example, a liquid crystal display (LCD), a loudspeaker, a vibrator, etc.; storage apparatuses 608 including, for example, a hard disk; and a communication apparatus 609. The communication apparatus 609 may allow the electronic self-walking robot to perform wireless or wired communication with other self-walking robots to exchange data. Although FIGs. 3 and 4 show electronic self-walking robots with various apparatuses, it should be understood that it is not required to implement or provide all shown apparatuses. Alternatively, more or fewer apparatuses may be implemented or provided.

In particular, according to the embodiments of the present disclosure, the process described above with reference to the flowchart may be implemented as a self-walking robot software program. For example, an embodiment of the present disclosure provides a self-walking robot software program product that includes a computer program carried on a readable medium, and the computer program includes program codes for executing the method shown in the flowchart of FIG. 4. In such an embodiment, the computer program may be downloaded and installed from a network by means of the communication apparatus 609, installed from the storage apparatus 608, or installed from the ROM 602. When the computer program is performed by the processing apparatus 601, the foregoing functions defined in the method in the embodiments of the present disclosure are performed.

Also, an embodiment of the present disclosure provides a self-moving cleaning device 100. The self-moving cleaning device 100 includes a body 110, a cleaning element 153, a driving apparatus, a perception apparatus, and a control module 160. At least a portion of the cleaning element 153 is located outside an edge projection area of the body. The driving apparatus is configured to drive the self-moving cleaning device to travel. The perception apparatus is configured to perceive obstacle information around the perimeter of the self-moving cleaning device. The control module 160 is configured to determine a target interference area based on the perception information of the perception apparatus, and control the driving apparatus to drive the self-moving cleaning device to travel based on the obstacle information within the target interference area.

Also, the body 110 is circular. The perception apparatus is also configured to determine a position of the self-moving cleaning device in a space where it is located. The control module 160 is also configured to determine the target interference area based on a structure of the self-moving cleaning device and a position, determined by the perception apparatus, of the self-moving cleaning device in a map of the space where it is located, wherein the structure of the self-moving cleaning device includes a radius of the body 110, and a maximum distance between an outer edge of the cleaning element 153 located outside the edge projection area of the body 110 and a rotation center of the body 110.

Also, the control module 160 is also configured to: when it is determined based on the perception information of the perception apparatus that there is an obstacle within the target interference area, determine a relative position between the obstacle and the self-moving cleaning device based on the perception information of the perception apparatus. The control module 160 is also configured to control the driving apparatus to drive the self-moving cleaning device to perform a corresponding obstacle avoidance operation based on the relative position.

Also, the cleaning element 153 is arranged at the rear of the body 110. The control module 160 is also configured to: when it is determined based on the perception information of the perception apparatus that the obstacle is located at one side of the self-moving cleaning device and the self-moving cleaning device performs a turning operation toward a side opposite to the obstacle, acquire a reachable area of the self-moving cleaning device based on the map of the space where the self-moving cleaning device is located. The control module 160 is also configured to determine a rotation direction and a rotation angle of the self-moving cleaning device based on the reachable area, and control the driving apparatus to drive the self-moving cleaning device to perform a backward operation after rotating according to the rotation direction and the rotation angle to enable the obstacle to exit the target interference area.

Also, the control module 160 is also configured to control the driving apparatus to drive the self-moving cleaning device to rotate back to an original angle and perform the turning operation.

Also, a plurality of the cleaning elements 153 is symmetrically arranged at the rear of the body 110; and the control module 160 is also configured to:
when the obstacle is located behind the self-moving cleaning device and the self-moving cleaning device performs a turning operation, acquire a reachable area of the self-moving cleaning device based on the map of the space where the self-moving cleaning device is located; and when it is determined based on the perception information of the perception apparatus that the reachable area is located in front of the self-moving cleaning device, control the driving apparatus to drive the self-moving cleaning device to travel forward to enable the obstacle to exit the target interference area, otherwise, determine a rotation direction and a rotation angle of the self-moving cleaning device based on the reachable area, and control the driving apparatus to drive the self-moving cleaning device to perform a forward operation after rotating according to the rotation direction and the rotation angle to enable the obstacle to exit the target interference area.

Also, the control module 160 is also configured to: if it is determined based on the perception information of the perception apparatus that the obstacle is still located within the target interference area after the self-moving cleaning device is controlled to perform the forward operation after rotating according to the rotation direction and the rotation angle, re-determine a rotation direction and a rotation angle of the self-moving cleaning device based on the reachable area, and control the driving apparatus to drive the self-moving cleaning device to perform a forward operation after rotating according to the re-determined rotation direction and rotation angle to enable the obstacle to exit the target interference area.

Also, the control module 160 is also configured to: control the driving apparatus to drive the self-moving cleaning device to perform the turning operation after the obstacle exits the target interference area.

Also, the self-moving cleaning device also includes: a motion mechanism configured to drive the cleaning element 153 to rotate.

The control module 160 is also configured to: if it is determined based on the perception information of the perception apparatus that the obstacle is still located within the target interference area, after repeating the step of re-determining the rotation direction and the rotation angle based on the reachable area and controlling the self-moving cleaning device to perform a forward operation after rotating according to the re-determined rotation direction and rotation angle for multiple times, control the motion mechanism to adjust a rotation direction of the cleaning elements 153 to enable the rotation direction of the cleaning elements 153 to be the same as a turning direction of the turning operation, or control the motion mechanism to enable the cleaning elements 153 to stop rotating and control the motion mechanism to drive the self-moving cleaning device to perform the turning operation until the obstacle exits the target interference area.

Through the description of the above embodiments, those skilled in the art can clearly understand that the present disclosure can be implemented by means of software and necessary general-purpose hardware platform, or by hardware.

Those skilled in the art can understand that the accompanying drawings are merely schematic diagrams of an optional implementation scenario, and units or processes in the accompanying drawings are not necessarily essential for implementing the present disclosure. Those skilled in the art can understand that units in apparatuses in the implementation scenario may be distributed in the apparatuses in the implementation scenario according to the description of the implementation scenario, and may also be correspondingly changed and configured in one or more apparatuses different from that in the current implementation scenario. The units in the above-mentioned implementation scenarios may be merged into a single unit or be sub-divided into multiple sub-units.

The above serial numbers of the present disclosure are merely for description, and do not represent the priority of the implementation scenarios. Only a few specific implementation scenarios of the present disclosure are disclosed above; however, the present disclosure is not limited thereto. Any changes that can be conceived by those skilled in the art shall fall within the protection scope of the present disclosure.

## Claims

1. A control method of a self-moving cleaning device, wherein the self-moving cleaning device comprises: a body and a cleaning element arranged at the bottom of the body, at least a portion of the cleaning element is located outside an edge projection area of the body; and the control method of the self-moving cleaning device comprises:
determining a target interference area of the self-moving cleaning device; and
controlling the self-moving cleaning device to travel based on obstacle information within the target interference area.

2. The control method of the self-moving cleaning device according to claim **1,** wherein the body is circular; and the determining the target interference area of the self-moving cleaning device comprises:
determining the target interference area based on a structure of the self-moving cleaning device and a position of the self-moving cleaning device in a space where it is located, wherein the structure of the self-moving cleaning device comprises a radius of the body, and a maximum distance between an outer edge of the cleaning element located outside the edge projection area of the body and a rotation center of the body.

3. The control method of the self-moving cleaning device according to claim 1 or 2, wherein the controlling the self-moving cleaning device to travel based on the obstacle information within the target interference area comprises:
when an obstacle exists within the target interference area, determining a relative position between the obstacle and the self-moving cleaning device; and
controlling the self-moving cleaning device to perform a corresponding obstacle avoidance operation based on the relative position.

4. The control method of the self-moving cleaning device according to claim 3, wherein the cleaning element is arranged at the rear of the body; and the controlling the self-moving cleaning device to perform the corresponding obstacle avoidance operation based on the relative position comprises:
when the obstacle is located at one side of the self-moving cleaning device and the self-moving cleaning device performs a turning operation toward a side opposite to the obstacle, acquiring a reachable area of the self-moving cleaning device based on a map of the space where the self-moving cleaning device is located; and
determining a rotation direction and a rotation angle of the self-moving cleaning device based on the reachable area, and controlling the self-moving cleaning device to perform a backward operation after rotating according to the rotation direction and the rotation angle to enable the obstacle to exit the target interference area.

5. The control method of the self-moving cleaning device according to claim 4, wherein the controlling the self-moving cleaning device to perform the corresponding obstacle avoidance operation based on the relative position also comprises: enabling the self-moving cleaning device to rotate back to an original angle and perform the turning operation.

6. The control method of the self-moving cleaning device according to claim 3, wherein a plurality of cleaning elements are symmetrically arranged at the rear of the body; and the controlling the self-moving cleaning device to perform the corresponding obstacle avoidance operation based on the relative position comprises:
when the obstacle is located behind the self-moving cleaning device and the self-moving cleaning device performs a turning operation, acquiring a reachable area of the self-moving cleaning device based on a map of the space where the self-moving cleaning device is located; and
when the reachable area is located in front of the self-moving cleaning device, enabling the self-moving cleaning device to travel forward to cause the obstacle to exit the target interference area, otherwise, determining a rotation direction and a rotation angle of the self-moving cleaning device based on the reachable area, and controlling the self-moving cleaning device to perform a forward operation after rotating according to the rotation direction and the rotation angle to enable the obstacle to exit the target interference area.

7. The control method of the self-moving cleaning device according to claim 6, wherein the controlling the self-moving cleaning device to perform the corresponding obstacle avoidance operation based on the relative position also comprises:
if the obstacle is still located within the target interference area, after the self-moving cleaning device is controlled to perform the forward operation after rotating according to the rotation direction and the rotation angle, re-determining a rotation direction and a rotation angle of the self-moving cleaning device based on the reachable area, and controlling the self-moving cleaning device to perform a forward operation after rotating according to the re-determined rotation direction and rotation angle to enable the obstacle to exit the target interference area.

8. The control method of the self-moving cleaning device according to claim 7, wherein the controlling the self-moving cleaning device to perform the corresponding obstacle avoidance operation based on the relative position also comprises:
if the obstacle is still located within the target interference area, after repeating the step of re-determining the rotation direction and the rotation angle based on the reachable area and controlling the self-moving cleaning device to perform a forward operation after rotating according to the re-determined rotation direction and rotation angle for multiple times, adjusting a rotation direction of the cleaning elements to enable the rotation direction of the cleaning elements to be the same as a turning direction of the turning operation, or controlling the cleaning elements to stop rotating and controlling the self-moving cleaning device to perform the turning operation until the obstacle exits the target interference area.

9. The control method of the self-moving cleaning device according to claim 7, wherein the controlling the self-moving cleaning device to perform the corresponding obstacle avoidance operation based on the relative position also comprises:
enabling the self-moving cleaning device to perform the turning operation after the obstacle exits the target interference area.

10. A control apparatus of a self-moving cleaning device, wherein the self-moving cleaning device comprises: a body and a cleaning element arranged at the bottom of the body, at least a portion of the cleaning element being located outside an edge projection area of the body; and the control apparatus comprises:
a determination module configured to determine a target interference area of the self-moving cleaning device; and
a control module configured to control the self-moving cleaning device to travel based on obstacle information within the target interference area.

11. The control apparatus of the self-moving cleaning device according to claim 10, wherein the body is circular; and the determination module is configured to:
determine the target interference area based on a structure of the self-moving cleaning device and a position of the self-moving cleaning device in a space where it is located, wherein the structure of the self-moving cleaning device comprises a radius of the body, and a maximum distance between an outer edge of the cleaning element located outside the edge projection area of the body and a rotation center of the body.

12. The control apparatus of the self-moving cleaning device according to claim 10 or 11, wherein the control module comprises:
a relative position determination module configured to: when an obstacle exists within the target interference area, determine a relative position between the obstacle and the self-moving cleaning device; and
a processing module configured to control the self-moving cleaning device to perform a corresponding obstacle avoidance operation based on the relative position.

13. The control apparatus of the self-moving cleaning device according to claim 12, wherein the cleaning element is arranged at the rear of the body; and the processing module comprises:
a first acquisition unit configured to: when the obstacle is located at one side of the self-moving cleaning device and the self-moving cleaning device performs a turning operation toward a side opposite to the obstacle, acquire a reachable area of the self-moving cleaning device based on a map of the space where the self-moving cleaning device is located; and
a first processing unit configured to determine a rotation direction and a rotation angle of the self-moving cleaning device based on the reachable area, and control the self-moving cleaning device to perform a backward operation after rotating according to the rotation direction and the rotation angle to enable the obstacle to exit the target interference area.

14. The control apparatus of the self-moving cleaning device according to claim 13, wherein the processing module also comprises:
a reset unit configured to control the self-moving cleaning device to rotate back to an original angle and perform the turning operation.

15. The control apparatus of the self-moving cleaning device according to claim 12, wherein a plurality of the cleaning elements are symmetrically arranged at the rear of the body; and the processing module comprises:
a second acquisition unit configured to: when the obstacle is located behind the self-moving cleaning device and the self-moving cleaning device performs a turning operation, acquire a reachable area of the self-moving cleaning device based on a map of the space where the self-moving cleaning device is located; and
a second processing unit configured to: when the reachable area is located in front of the self-moving cleaning device, enable the self-moving cleaning device to travel forward to cause the obstacle to exit the target interference area, otherwise, determine a rotation direction and a rotation angle of the self-moving cleaning device based on the reachable area, and control the self-moving cleaning device to perform a forward operation after rotating according to the rotation direction and the rotation angle to enable the obstacle to exit the target interference area.

16. The control apparatus of the self-moving cleaning device according to claim 15, wherein the processing module also comprises:
a third processing unit configured to: if the obstacle is still located within the target interference area after the self-moving cleaning device is controlled to perform the forward operation after rotating according to the rotation direction and the rotation angle, re-determine a rotation direction and a rotation angle of the self-moving cleaning device based on the reachable area, and control the self-moving cleaning device to perform a forward operation after rotating according to the re-determined rotation direction and rotation angle to enable the obstacle to exit the target interference area.

17. The control apparatus of the self-moving cleaning device according to claim 16, wherein the processing module also comprises:
a fourth processing unit configured to: if the obstacle is still located within the target interference area, after the step that the rotation direction and the rotation angle are re-determined based on the reachable area and the self-moving cleaning device is controlled to perform a forward operation after rotating according to the re-determined rotation direction and rotation angle is repeated multiple times, adjust a rotation direction of the cleaning elements to enable the rotation direction of the cleaning elements to be the same as a turning direction of the turning operation, or control the cleaning elements to stop rotating and control the self-moving cleaning device to perform the turning operation until the obstacle exits the target interference area.

18. The control apparatus of the self-moving cleaning device according to claim 16, wherein the processing module also comprises:
a fifth processing unit configured to enable the self-moving cleaning device to perform the turning operation after the obstacle exits the target interference area.

19. A readable storage medium, having a program or instruction stored thereon, wherein the program or instruction, when performed by a processor, implements the steps of the control method of the self-moving cleaning device according to any one of claims 1 to 9.

20. A self-moving cleaning device, comprising a storage medium, a processor, and a computer program stored on the storage medium and executable on the processor, wherein the processor, when executing the program, implements the control method of the self-moving cleaning device according to any one of claims 1 to 9.

21. A self-moving cleaning device, comprising:
a body and a cleaning element arranged at the bottom of the body, at least a portion of the cleaning element being located outside an edge projection area of the body;
a driving apparatus configured to drive the self-moving cleaning device to travel;
a perception apparatus configured to perceive obstacle information around a perimeter of the self-moving cleaning device; and
a control module configured to determine a target interference area of the self-moving cleaning device based on the perception information of the perception apparatus, and control the driving apparatus to drive the self-moving cleaning device to travel based on the obstacle information within the target interference area.

22. The self-moving cleaning device according to claim 21, wherein the body is circular;
the perception apparatus is also configured to determine a position of the self-moving cleaning device in a space where it is located; and
the control module is also configured to determine the target interference area based on a structure of the self-moving cleaning device and a position, determined by the perception apparatus, of the self-moving cleaning device in a map of the space where it is located, wherein the structure of the self-moving cleaning device comprises a radius of the body, and a maximum distance between an outer edge of the cleaning element located outside the edge projection area of the body and a rotation center of the body.

23. The self-moving cleaning device according to claim 21 or 22, wherein
the control module is also configured to: when it is determined based on the perception information of the perception apparatus that an obstacle exists within the target interference area, determine a relative position between the obstacle and the self-moving cleaning device based on the perception information of the perception apparatus; and
the control module is also configured to control the driving apparatus to drive the self-moving cleaning device to perform a corresponding obstacle avoidance operation based on the relative position.

24. The self-moving cleaning device according to claim 23, wherein the cleaning element is arranged at the rear of the body;
the control module is also configured to: when it is determined based on the perception information of the perception apparatus that the obstacle is located at one side of the self-moving cleaning device and the self-moving cleaning device performs a turning operation toward a side opposite to the obstacle, acquire a reachable area of the self-moving cleaning device based on the map of the space where the self-moving cleaning device is located; and
the control module is also configured to determine a rotation direction and a rotation angle of the self-moving cleaning device based on the reachable area, and control the driving apparatus to drive the self-moving cleaning device to perform a backward operation after rotating according to the rotation direction and the rotation angle to enable the obstacle to exit the target interference area.

25. The self-moving cleaning device according to claim 24, wherein
the control module is also configured to control the driving apparatus to drive the self-moving cleaning device to rotate back to an original angle and perform the turning operation.

26. The self-moving cleaning device according to claim 23, wherein a plurality of the cleaning elements are symmetrically arranged at the rear of the body; and the control module is also configured to:
when the obstacle is located behind the self-moving cleaning device and the self-moving cleaning device performs a turning operation, acquire a reachable area of the self-moving cleaning device based on the map of the space where the self-moving cleaning device is located; and
when it is determined based on the perception information of the perception apparatus that the reachable area is located in front of the self-moving cleaning device, control the driving apparatus to drive the self-moving cleaning device to travel forward to enable the obstacle to exit the target interference area, otherwise, determine a rotation direction and a rotation angle of the self-moving cleaning device based on the reachable area, and control the driving apparatus to drive the self-moving cleaning device to perform a forward operation after rotating according to the rotation direction and the rotation angle to enable the obstacle to exit the target interference area.

27. The self-moving cleaning device according to claim 26, wherein the control module is also configured to:
if it is determined based on the perception information of the perception apparatus that the obstacle is still located within the target interference area after the self-moving cleaning device is controlled to perform the forward operation after rotating according to the rotation direction and the rotation angle, re-determine a rotation direction and a rotation angle of the self-moving cleaning device based on the reachable area, and control the driving apparatus to drive the self-moving cleaning device to perform a forward operation after rotating according to the re-determined rotation direction and rotation angle to enable the obstacle to exit the target interference area.

28. The self-moving cleaning device according to claim 27, wherein the control module is also configured to:
control the driving apparatus to drive the self-moving cleaning device to perform the turning operation after the obstacle exits the target interference area.

29. The self-moving cleaning device according to claim 27, also comprising:
a motion mechanism configured to drive the cleaning element to rotate; and
the control module is also configured to:
if it is determined based on the perception information of the perception apparatus that the obstacle is still located within the target interference area, after repeating the step of re-determining the rotation direction and the rotation angle based on the reachable area and controlling the self-moving cleaning device to perform a forward operation after rotating according to the re-determined rotation direction and rotation angle for multiple times, control the motion mechanism to adjust a rotation direction of the cleaning elements to enable the rotation direction of the cleaning elements to be the same as a turning direction of the turning operation, or control the motion mechanism to enable the cleaning elements to stop rotating and control the driving apparatus to drive the self-moving cleaning device to perform the turning operation until the obstacle exits the target interference area.
